Europäisches Patentamt

European Patent Office

Office européen des brevets

(11) Publication number: **0 055 057**
A2

# EUROPEAN PATENT APPLICATION

(21) Application number: 81305841.9

(22) Date of filing: 11.12.81

(51) Int. Cl.³: **C 08 L 49/00,** H 01 B 1/12

(30) Priority: 22.12.80 US 219405

(43) Date of publication of application: **30.06.82** **Bulletin 82/26**

(84) Designated Contracting States: **AT BE CH DE FR GB IT LI NL SE**

(71) Applicant: **Rohm and Haas Company, Independence Mall West, Philadelphia, Pennsylvania 19105 (US)**

(72) Inventor: **Gleim, Robert David, R.D. No. 1 390 Lower Dolington Road, Newtown Pennsylvania 10940 (US)**

(74) Representative: **Angell, David Whitton et al, Rohm and Haas Company Patent Department Chesterfield House Barter Street, London WC1A 2TP (GB)**

(54) **Reducing polyacetylene crosslinking and embrittlement.**

(57) A process for reducing polyacetylene oxidation and embrittlement comprises contacting undoped polyacetylene with a liquid solution of pH greater than 7 of (a) anthraquinone and/or an anthraquinone salt and base and reducing agent; and/or (b) pyrogallol; and/or (c) a hydrosulfite.

The contact may be by immersion either for storage of cis- and/or trans-polyacetylene or during processes for converting cis-polyacetylene to trans-polyacetylene.

The so treated polyacetylene may subsequently be doped.

ACTORUM AG

0055057

## REDUCING POLYACETYLENE CROSSLINKING AND EMBRITTLEMENT.

This invention is concerned with a process for reducing polyacetylene crosslinking and embrittlement, with compositions containing polyacetylene so treated and with processes for converting cis-polyacetylene to trans-polyacetylene.

Polyacetylene may be prepared as disclosed in the Journal of Polymer Science, Volume 12, pages 11 to 20, Shirakawa, et al (1974), and Trans. Faraday Society, Volume 64, pages 823 to 828, Berets, et al (1968).

Polyacetylene has valuable electrical properties for a wide variety of uses. However, polyacetylene quickly becomes brittle and begins to lose its ability to acquire enhanced electrical conductivity properties when doped. Even polyacetylene powder soon begins to lose its electrical conductivity potential and becomes modified to make it more difficult to form articles therefrom. This loss of properties may arise because the polyacetylene, when prepared at $-78^{\circ}$C., is in the form of cis-polyacetylene which, although generally considered stable at temperatures of from $-78^{\circ}$C. to $0^{\circ}$C., isomerizes slowly, even at $-78^{\circ}$C., to trans-poly-acetylene. At temperatures above $0^{\circ}$C., this isomerization accelerates. During isomerisation free radicals are formed and these may crosslink or otherwise react with available oxygen. This reaction contributes to the embrittlement of, for example, a polyacetylene film by the formation of carbonyl and hydroxy groups. These groups in turn disrupt the conjugation of the polyacetylene double bonds and thereby decrease the ability of the polyacetylene to acquire enhanced electrical conductivity. For a discussion of polyacetylene film preparation and isomerisation see Journal of Polymer Science, Volume 12, pages 11 to 20, Shirakawa, et al (1974).

Cis-polyacetylene is more flexible than trans-polyacetylene, but trans-polyacetylene has greater intrinsic electrical conductivity properties and dynamically more stable.

As the free radical formation cannot be eliminated it would be advantageous to eliminate or reduce the presence,or,effect, of free oxygen so that the result of the free radical formation would be reduced.

Embrittlement of a cis-polyacetylene film or other formed article can be delayed by storage at low temperature (-78$^{\circ}$C. to 0$^{\circ}$C.) under vacuum or inert gas such as nitrogen, argon or helium. This formed the basis for previous attempts to avoid embrittlement by preparing of cis-polyacetylene and storing it at such low temperatures under vacuum or inert gas. These procedures are cumbersome.

We have unexpectedly found that a certain small class of substances have greater affinity than polyacetylene for oxygen so that they can successfully compete with the polyacetylene for any oxygen present.

The Journal of the American Chemical Society, Volume 46, pages 2639 to 2647, L.F.Fieser (1924), discloses the use of certain aqueous solutions as absorbents for oxygen in gas analysis. These solutions comprise an anthraquinone salt, a base and a reducing agent. This article also discloses a potassium pyrogallate solution used for comparative purposes and also the use of pyrogallol and the use of a hyposulfite solution. However, this article does not deal with the problem of two substances competing for oxygen and the article, being directed to oxygen absorbents in gas analysis does not teach or relate to the circumstances of this invention.

Our invention is applicable to the avoidance of reaction between oxygen and free radicals formed during the isomerisation of cis-polyacetylene to the trans form and to the limitation of contact between trans-polyacetylene and oxygen which contact causes further embrittlement of the material and reduction of its electrical conductivity potential. The prior art method of excluding oxygen, namely using an inert atmosphere, is unattractive.

This invention provides a process for reducing polyacetylene oxidation and embrittlement comprising the steps of treating undoped polyacetylene with a solution, having a pH greater than 7, of one or more of the following materials: (a) a combination of anthraquinone or an anthraquinone salt, a base and a reducing agent; (b) pyrogallol; and (c) a hydrosulfite.

This invention also contemplates a process for isomerizing cis-polyacetylene at least partially to transpolyacetylene wherein the isomerisation is carried out as or after the polyacetylene is contacted with a liquid solution, having a pH greater than 7, of one or more of the following materials: (a) a mixture of anthraquinone and/or anthraquinone salt, and base and reducing agent; (b) pyrogallol; and (c) a hydrosulfite.

The polyacetylene which is to be protected may be in any shaped form but will usually be in the form of a powder, film or a foam-like material

- 4 -

0055057

(hereinafter referred to as a foam). The preparation of polyacetylene foams is described in Journal of Polymer Science; Polymer Letters Edition, Volume 17, pages 779-786, Wnek. Basically, polyacetylene foams may be prepared by polymerizing acetylene gas in the presence of a Ziegler-Natta type catalyst at concentrations that are less than normally employed when forming a film. After the polyacetylene gel is obtained, solvent is removed under vacuum from the gel and the solvent is replaced with benzene. The benzene in the gel is then frozen, and the benzene is then sublimed to prepare the polyacetylene foam.

Regardless of its form,the polyacetylene useful in this invention is undoped. The term "doped" means that the polyacetylene has been subjected to a treatnent to increase electrical conductivity properties as described in U.S. Patent 4,222,903. So by"undoped" we mean that polyacetylene has not been specifically treated to affect its electrical conductivity properties although it may have incidental, usually small amounts, of doping resulting from its preparation.

In the process of this invention, the oxygen scavenger may be present in the solution in a concentration of at least 0.01 molar and preferably from 0.01M to 10M. At a concentration less than 0.01 molar, the polyacetylene may not be adequately protected during prolonged storage. Concentrations above 10 molar are unnecessary but not inoperable.

In the case of the combination of anthraquinone or an anthraquinone salt, base and reducing agent, the anthraquinone salt may be considered as the active component and when this combination is used, the molar amounts given above relate to the concentration of anthraquinone or anthraquinone salt.

For any given amount of anthraquinone and/or anthraquinone salt, there are certain interrelationships, described below, between the anthraquinone and/or anthraquinone salt, base and reducing agent which govern the amount of base and reducing agent present.

To scavenge oxygen, the anthraquinone is in reduced form and this is responsible for the preferential oxygen scavenging. Certain acidic byproducts of this reduction are formed and if these are allowed to remain in the scavenging solution, eventually the pH of the solution will fall below 7 and the solution will begin to lose its effectiveness. When the reduced anthraquinone scavenges oxygen, it is again converted to the anthraquinone or the anthraquinone salt. The base is to remove the acidic byproducts from the solution but the base should not be present in an amount which exceeds 50 times the number of moles of anthraquinone present.

The amount of reducing agent is not so critical in that there is preferably more base than reducing agent present although an excess of reducing agent is permissible. In the latter case, when the supply of base is exhausted, the reducing agent will still function to reduce the anthraquinone or anthraquinone salt to a form which scavenges oxygen although there will then be a build up of acidic byproducts to reduce the pH of the solution to less than 7 whereupon the solution becomes less effective.

So the number of moles of base present may vary to up to 50 times the number of moles of anthraquinone and/or anthraquinone salt present and, although there is preferably at least as much base as reducing agent present, there may be more or less reducing agent than base. In a typical useful scavenging solution, the mole ratio of anthraquinone and/or anthraquinone salt to base to reducing agent may be from 1 to 28 to 7, respectively.

It is also preferred that the reducing agent be present in a large excess over the anthraquinone or salt thereof and a saturated solution of the reducing agent may be used.

Typically, for each mole of anthraquinone and/or anthraquinone salt present, useful amounts of each of the base and the reducing agent will be from 1 to 50 moles.

Useful anthraquinone salts include anthraquinone β-sulfonate, sodium anthraquinone-β-sulfonate, sodium anthraquinone α-sulfonate; disubstituted anthraquinone sulfonic acid salts such as the 1,5-disulfonic acid salts and the 2,6 disulfonic acid salts.

The Bases which may be used include nitrogenous bases such as nitrogenous organic bases, and metal and other hydroxides such as sodium hydroxide, potassium hydroxide, calcium hydroxide and ammonium hydroxide. The nitrogenous base may be a primary, secondary or tertiary amine or a quaternary ammonium hydroxide, for example ethylene diamine, tetraethylene pentamine, n-propylamine, 2-hexylamine, tetra-n-butyl ammonium hydroxide, pyridine and diazabicyclo-[2·2·2] octane.

Useful reducing agents include any water soluble or organic solvent-soluble reducing agents such as sodium dithionite, sodium borohydride, potassium borohydride and sodium cyanoborohydride.

Any water or organic solvent-soluble hydrosulfite may be used for example sodium or potassium hydrosulfite, despite the fact that sodium hydrosulfite itself tends to be unstable at a temperature above $60^{\circ}$C. During isomerization of cis-polyacetylene to trans-polyacetylene, temperatures in excess of $60^{\circ}$C. may be used.

Temperatures at which the solution will neither boil nor freeze should be used.

The solvent for the oxygen scavenger may be water and may include a water-miscible co-solvent such as ethylene glycol, methyl alcohol, ethyl alcohol, dimethyl sulfoxide, tetrahydrofuran, dimethyl formamide, acetonitrile, glyme, diglyme. The use of a co-solvent is often advantageous because it enables the use of temperatures above the boiling point of a simple aqueous solution.

Organic solutions may however be preferred because they generally have a lower freezing point than water so that lower protection temperatures can be used and this may be advantageous when the polyacetylene contains at least some cis-polyacetylene which it is desired to maintain by keeping the temperature low so that the cis-polyacetylene does not isomerize to trans-polyacetylene. Also using water as a solvent at low temperatures carries the danger that the dissolved oxygen scavenger may precipitate.

As long as the organic solvent will dissolve the desired amount of oxygen scavenger(s) it is useful; useful organic solvents including dimethyl formamide, dimethyl acetamide, N-methyl pyrrolidone, dimethyl sulfoxide, tetrahydrofuran, sulfolane, glyme and diglyme.

To convert cis-polyacetylene, partly or wholly, to trans-polyacetylene, elevated temperatures are often generally used although the useful temperature range is from -78°C. to 250°C. The maximum temperature is limited only by the boiling point of the solvent system. Super-atmospheric pressures may be used to increase the operating temperature.

The polyacetylene usually in the form of powder, foam or film may be contacted with the protection agent by immersion. In a typical protective operation, polyacetylene is immersed in the solution and the vessel containing the polyacetylene is then sealed to exclude oxygen.

The isomerisation of cis-polyacetylene, partly or wholly to the trans form, may be accomplished by immersing the cis-polyacetylene in the solution at a temperature of from -78°C. to 250°C. preferably from 0°C. to 250°C. and maintaining the temperature until the desired amount of trans isomer has been obtained, as determined by infrared analysis.

The polyacetylene to be isomerised may be 100% by weight, of cis-polyacetylene or may comprise, for example, 25%, 50% or 75% or more of cis-polyacetylene. The isomerized product may comprise; from 10% to 100% trans-polyacetylene. The trans-polyacetylene containing product may be doped to increase its electrical conductivity properties.

Thus the invention is useful in the storing of predominantly cis-polyacetylene, in the isomerisation process and in the storing of predominantly trans-polyacetylene before doping.

The following Examples illustrate some preferred embodiments of the invention.

Example 1

A solution is prepared by mixing in a beaker containing one litre of water, 200g. of potassium hydroxide; 150g. of sodium dithionite; and 20g. of sodium anthraquinone-beta sulfonate. A deep red solution forms immediately upon the addition of the anthraquinone salt. A strip of cis-polyacetylene film, 2.54 cm by 7.62 cm (1 inch by 3 inches) by 4 mils, is placed in a jar and the solution is added to the jar so that the polyacetylene film is completely immersed in the solution. About 250cc. of airspace is left in the jar. The jar is then closed, but not hermetically sealed, thereby allowing some air to leak into the jar. The jar is allowed to stand for ten months at room temperature. At the end of ten months the film is removed from the solution and it is sufficiently flexible to be doubled in half without breaking. In contrast with this, both cis-polyacetylene and trans-polyacetylene film exposed directly to air for less than one week, crumbles upon handling.

Example 2

A solution of alkaline pyrogallol is prepared by mixing 150g. of pyrogallol with 1,350 millilitres of a potassium hydroxide solution having a specific gravity of 1.55 to 150 millilitres of water.

A second solution is prepared in the manner of Example 1.

As comparative test, aqueous solutions containing 20% by weight of other oxygen scavengers as follows are prepared:

(1) (octadecyl 3-(5,di-tertiary-butyl-4-hydroxy phenyl) propionate.

(2) A hindered phenol containing nickel phosphonate and having the formula Ni-bis [o-ethyl(3,5-di-tertiary-butyl-4-hydroxy benzyl)]

(3) Cyanox 1729 a hindered phenol containing sulfur and manufactured by American Cyanamid Company.

0055057

(4) A hindered bisphenol having the formula 2,2'methylene bis(6-tert-butyl-4-methyl phenol).

(5) Cyanox 1735 an alkylidene polyphenol manufactured by American Cyanamid Company.

(6) Methyl ether of hydroquinone dissolved in tetrahydrofuran.

The solutions are all placed in jars and about 250cc. of airspace remains in each jar. Freshly prepared strips 2.54 cm by 7.62 cm (one inch by three inches) by 4 mils of cis-polyacetylene films are immersed in each of the solutions and the jars are then closed but not hermetically sealed. After one week in the closed, air-containing jars, the films which are immersed in solutions 1 to 5 were all embrittled and crumbled on handling.

After one month, the film in the solution 6 is also embrittled and crumbles on handling.

The films immersed in the solution of Example 1 and in the alkaline pyrogallol solution remain flexible after 8 months in the jar and show no signs of embrittlement.

Example 3

Cis-polyacetylene film is prepared by the method of Shirakawa, et al. Journal of Polymer Science, Polymer Chemistry Edition, Volume 12, pages 11-20 (1974). The cis-polyacetylene film is then thoroughly washed with dry toluene at a temperature of -78°C. and under a nitrogen atmosphere. The film measures 30.48 cm by 25.4 cm(12 inches by 10 inches)and is from 2 to 4 mils thick. The film is immediately immersed in a vessel containing the solution prepared as in Example 1. The vessel is then heated to 100°C. and held there for 72 hours, whereupon a section of the film is removed and analysed by infrared spectroscopy for isomer content. The film is more than 95% trans-polyacetylene. Additionally, the film is free of carbonyl functional groups as determined by infrared spectroscopy. Additionally, the film remains flexible.

In a control test a cis-polyacetylene film is prepared as described above, placed in a vessel and heated in an air atmosphere at 200$^{\circ}$C. for 1.5 hours. The resultant film has a high content of trans-polyacetylene and is extremely brittle and crumbles when handled.

Example 4

Polyacetylene powder is prepared by the method disclosed in Berets, et al, Trans. Faraday Society, Volume 64, pages 823 to 828. The powder is immersed in a solution prepared in the manner of Example 1 and remains there for four days. The powder is then removed and washed with water and methanol and then dried in a vacuum. The powder is then compressed into a disk 3 cm. in diameter and 0.4 cm. thick. This disk is then doped with iodine vapour as disclosed in U.S. Patent 4,222,903.

A second disk is prepared and doped by the same method except that no immersion in any protective solution is carried out but the powder is instead exposed to the atmosphere for four days.

The electrical conductivity of both disks is measured using the procedure set forth in ASTM F-43, as applied to a polyacetylene film. The conductivity is calculated from the test results. The disk made from the protected powder exhibits superior conductivity properties than the second disk.

Example 5

In a flask is added 5.0 grams of sodium borohydride dissolved in 50 millilitres of dry N,N dimethyl formamide containing one gram of sodium anthraquinone-beta-sulfonate. 5.0 grams of sodium hydroxide is then added to the flask and a deep red-purple colour results.

A 5 cm. by 5 cm. by 3 to 4 mil thick section of cis-polyacetylene (greater than 70% cis isomer content) film is immersed in this solution. After 10 months, the film is removed, washed with water, dried and treated with a variety of P-type dopants to produce a film conductivity which exceeds $10^3 \text{OHM}^{-1} \text{cm}^{-1}$. The film remains sufficiently flexible to be doubled in half without breaking. By contrast with the above, a section of film which is not protected by immersion in the oxygen scavenging solution, and is allowed to remain exposed to air, is embrittled within one week.

Example 6

The procedure of Example 5 could be repeated except that anthraquinone was used in place of the sodium anthraquinone beta sulfonate. The solution was effective in protecting the cis-polyacetylene.

Example 7

The procedure of Example 5 was repeated several times except that the solvent used was replaced in turn by N-methyl pyrrolidone, dimethyl acetamide, and ethylene glycol dimethyl ether. In each instance, good results were obtained.

CLAIMS:

1. A process for reducing oxidation and embrittlement of undoped polyacetylene comprising contacting the polyacetylene with a liquid solution, of pH greater than 7, of one or more of the following:

(a) anthraquinone and/or an anthraquinone salt, and base and reducing agent;

(b) pyrogallol;

(c) a hydrosulfite.

2. A process as claimed in Claim 1 wherein the polyacetylene is cis- and/or transpolyacetylene and is immersed in said solution for storage.

3. A process as claimed in Claim 1 wherein the polyacetylene is contacted with said solution by immersion during a process for converting cis-polyacetylene therein to trans-polyacetylene.

4. A process as claimed in any preceding claim wherein the concentration of the anthraquinone and/or anthraquinone salt and/or pyrogallol and/or hydrosulfite in the solution is at least 0.1 m.

5. A process as claimed in any preceding claim wherein the polyacetylene is in the form of a powder, film or foamed material.

6. A process as claimed in any preceding claim in which the reducing agent is sodium cyanoborohydride or potassium borohydride.

7. A process as claimed in any preceding claim wherein the anthraquinone salt is sodium anthraquinone-alpha-sulfonate, sodium anthraquinone-beta-sulfonate or an anthraquinone disulfonic acid salt.

8. A process as claimed in any preceding claim wherein the hydrosulfite is sodium dithionate.

9. A process as claimed in any preceding claim wherein in (a) the base is present in an amount of up to 50 times, by mole, of anthraquinone and/or anthraquinone salt and/or the reducing agent is present in at least a storchiometric amount with respect to the anthraquinone and/or anthraquinone salt.

10. A process as claimed in any preceding claim wherein the reducing agent is a metal hydride or a hydroxide.